# EUROPEAN PATENT SPECIFICATION

(11) **EP 0 434 640 B1**
(45) Date of publication and mention of the grant of the patent: **17.03.1993**
(21) Application number: 90830562.6
(22) Date of filing: 04.12.1990
(51) Int. Cl.: B60K 20/04, B60K 23/08

(54) **A unit for operating a disengageable four-wheel-drive transmission for motor cars**
Schalteinheit für ein Getriebe eines Kraftfahrzeuges mit ausschaltbarem Vierradantrieb
Dispositif pour commander une boîte de vitesses pour désengagement d'une propulsion à quatres roues motrices pour véhicules

(30) Priority: 22.12.1989 IT 6815989
(43) Date of publication of application: 26.06.1991
(73) Proprietor: FIAT AUTO S.p.A., 10135 Torino (IT)
(72) Inventor: Egidi, Corrado, I-10139 Torino (IT); Panero, Carlo, I-10153 Torino (IT)
(74) Representative: Bosotti, Luciano

(56) References cited:
- DE-A- 3 129 871
- GB-A- 1 276 994
- GB-A- 1 437 231
- US-A- 4 077 276
- US-A- 4 221 277

## Description

The present invention relates in general to a disengageable four-wheel-drive transmission for a motor car of the type including a gearbox, permanent drive means for one pair of wheels, engageable and disengageable drive means for the other pair of wheels, means for engaging and disengaging the engageable and disengageable drive means, a reduction gear, means for engaging and disengaging the reduction gear, at least one lockable differential, and means for locking and unlocking the differential.

More particularly, the invention concerns a unit for operating such a transmission, including a gear lever and means for operating the means for engaging and disengaging the drive means, the reduction-gear engagement and disengagement means, and the means for locking and unlocking the differential.

The object of the present invention is to provide an operating unit of the type defined above which is compact and functional and which makes the operations it controls quicker and easier, whilst ensuring that they are carried out in the correct predetermined sequence without the risk of errors.

According to the invention, this object is achieved by means of an operating unit of the type specified, characterised in that the operating means comprise a single lever translatable axially between a lowered position and a raised position to disengage and engage the drive means respectively, the lever being rotatable about its axis of translation, when it is in the raised position, between two angular positions in which the reduction gear is engaged and disengaged respectively, and a rod mounted within the lever and movable axially relative thereto by means of a projecting operating end to lock and unlock the differential when the lever is in the raised position and in the angular position in which the reduction gear is engaged.

In order to prevent incorrect changes from the logical sequence in which the operations performed by the lever are carried out, the invention conveniently provides, associated with the lever, a first locking device for preventing the lever from rotating to engage or disengage the reduction gear when it is in its lowered position in which the drive means are disengaged, and a second locking device for preventing the rod from moving axially when the lever is in the angular position in which the reduction gear is disengaged.

The invention also provides particularly compact and easily implemented kinematic mechanisms for the selection and engagement of the gear ratios by means of the gear lever and for the engagement and disengagement of the drive means and the reduction gear. To advantage, these kinematic mechanisms are housed in a common protective housing which acts as a support for the two levers.

The invention will now be described in detail with reference to the appended drawings, provided purely by way of non-limiting example, in which:
Figure 1 is a schematic side elevational view of a control unit according to the invention,
Figure 2 is a partially-sectioned perspective view of the control unit,
Figure 3 is a longitudinal section taken on the line III-III of Figure 2,
Figure 4 is a vertical section taken on the line IV-IV of Figure 3,
Figure 5 is a section taken on the line V-V of Figure 3,
Figure 6 is a section taken on the line VI-VI of Figure 5,
Figure 7 is a section taken on the line VII-VII of Figure 3, showing the unit in a first operative configuration,
Figure 8 is a view similar to Figure 7, showing the unit in a second operative configuration,
Figure 9 is a section taken on the line IX-IX of Figure 7 on an enlarged scale,
Figure 10 is a section taken on the line X-X of Figure 8 on an enlarged scale, and
Figure 11 is a section taken on the line XI-XI of Figure 7.

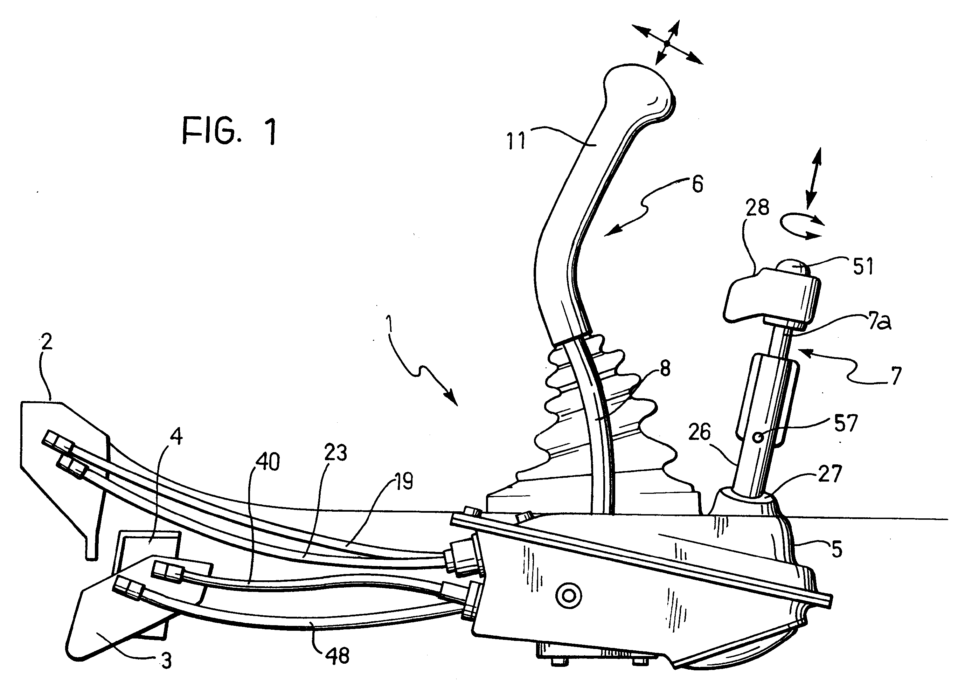

In the drawings, an operating unit for application to a motor car with a generally conventional four-wheel-drive transmission is generally indicated 1. In known manner, such a transmission includes a gearbox, whose input is shown schematically at 2 in Figure 1, associated with a permanent drive unit for the front wheels of the car and a rear-wheel drive unit which can be connected to the front-wheel drive unit by means of an engageable and disengageable clutch whose input is shown schematically at 3 in Figure 1. The transmission also includes, again in known manner, an engageable and disengageable reduction gear whose input is shown schematically at 4 in Figure 1, a front differential, and a rear differential with a known locking and unlocking device which is normally electro-pneumatic. These transmission components are not shown in detail and for brevity will not be described since they are normally known to an expert in the art.

The control unit 1 includes essentially a protective support housing 5 from the top of which project a front lever 6 for operating the gearbox 2 and a single rear lever 7 operable in a predetermined sequence to engage and disengage the rear-wheel drive and the reduction gear and to lock and unlock the rear differential.

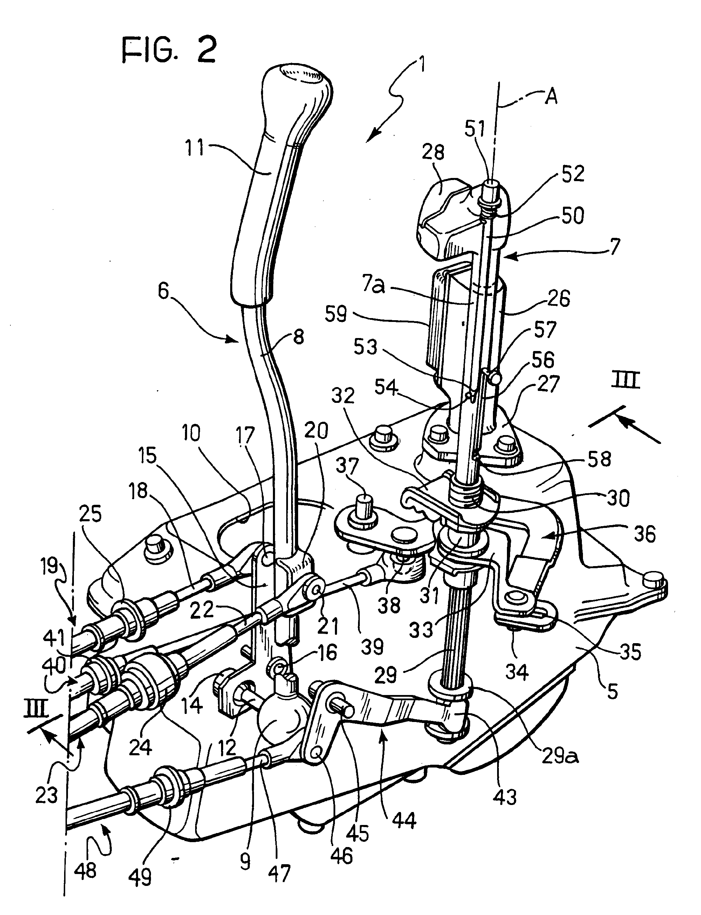

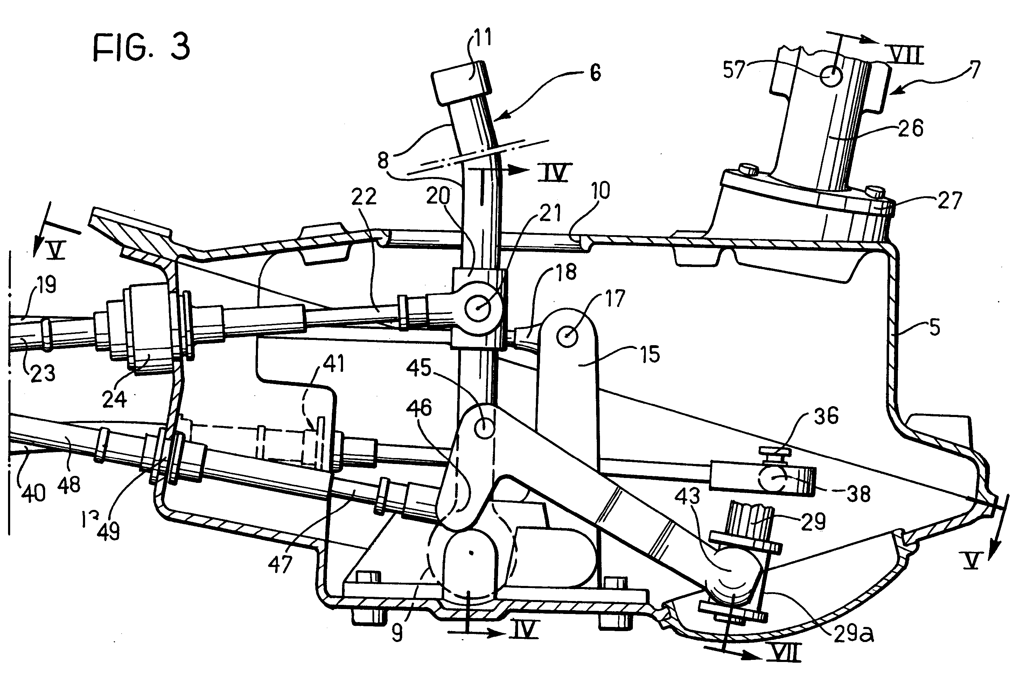

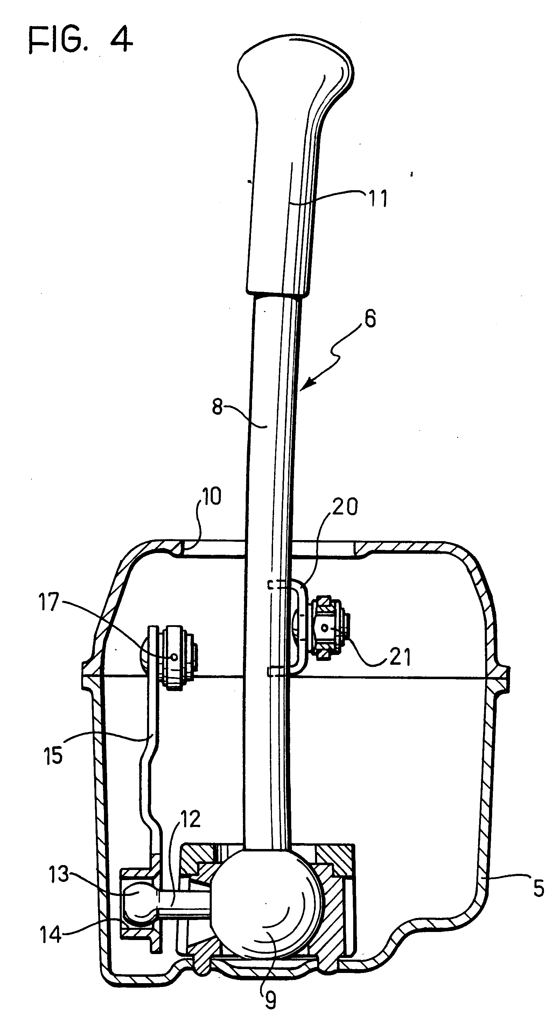

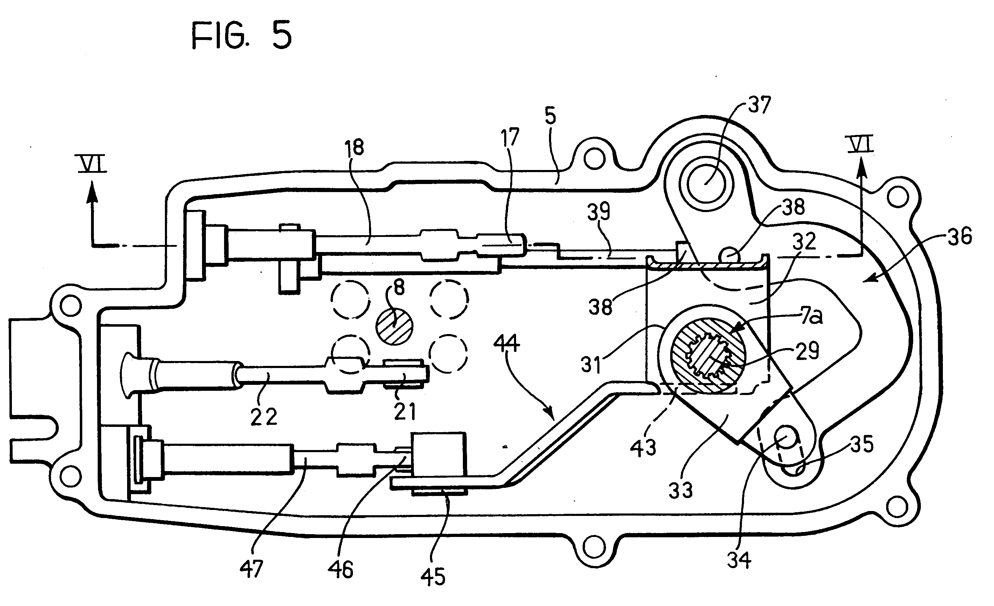

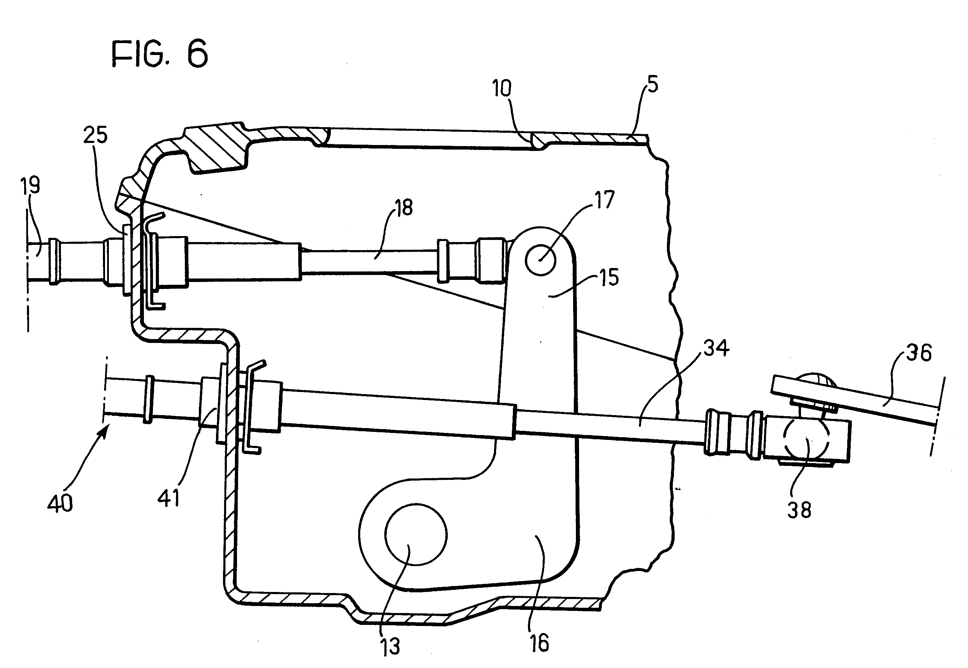

With reference in greater detail to Figures 2 to 6, the front lever 6 includes a rod 8 supported at its lower end by the housing 5 by means of a ball joint 9 and movable with clearance in a hole 10 in the top of the housing 5. The rod 8 has a hand-grip 11 at its upper end.

A radial side arm 12 is fixed to the ball joint 9 and in turn has a spherical head 13 engaged in a seat 14 at the lower end of a right-angled element 15 which pivots about a transverse pin 16 carried by the housing 5. The upper end of the pivoting element 15 is articulated at 17 to one end 18 of a Bowden cable transmission 19.

Above the ball joint 9, the rod 8 of the lever 6 has a lateral appendage 20 to which one end 22 of a second Bowden cable transmission 23 is articulated at 21. The transmissions 23 and 19 pass through the housing 5 in correspondnece with respective fixing bushes 24 and 25 and are connected to the gearbox 2 for selecting the gears (as a result of the transverse movements of the lever 6) and engaging them (as a result of the longitudinal movements of the lever 6) respectively.

With reference now in greater detail to Figures 2, 5 and 7, the rear lever 7 is constituted by a cylindrical rod 7a, whose axis is indicated A, slidable axially and rotatable in a tubular guide element 26 fixed by a flange 27 to the top of the housing 5. The rod 7a carries a shaped hand-grip 28 at its upper end and its lower end has a splined part 29 which extends within the housing 5. The splined part 29 passes through an externally-threaded bush 30 screwed to the base of the tubular guide 26 and a sleeve 31 supported rotatably below the bush 30 by a bracket 32. The sleeve 31 is internally splined and is coupled for rotation with the splined part 29.

A bent arm 33 is fixed to the sleeve 31 and its free end carries a pin 34 substantially parallel to the axis A of the lever 7 and engaged in a slot 35 in one end of a U-shaped transmission element 36 whose opposite end is articulated to the housing 5 by means of a pivot pin 37 parallel to the pin 34. Near the pin 37, the transmission element 36 carries a ball joint 38 to which one end 39 of a Bowden cable transmission 40 is connected. The transmission 40 is anchored to the front wall of the housing 5 by means of a bush 41 and controls the engagement and disengagement of the reduction gear 4.

A grooved bush 29a is fixed to the lower end of the splined portion 29 and an end 43 of a rocker element 44 pivotable on the housing 5 about a transverse pin 45 is engaged pivotably therein. The other end of the rocker element 44 is articulated at 46 to an end 47 of a Bowden cable transmission 48 which is also anchored to the front wall of the housing 5 by means of a bush 49. The transmission 48 controls the engagement and disengagement of the rear-wheel drive of the car.

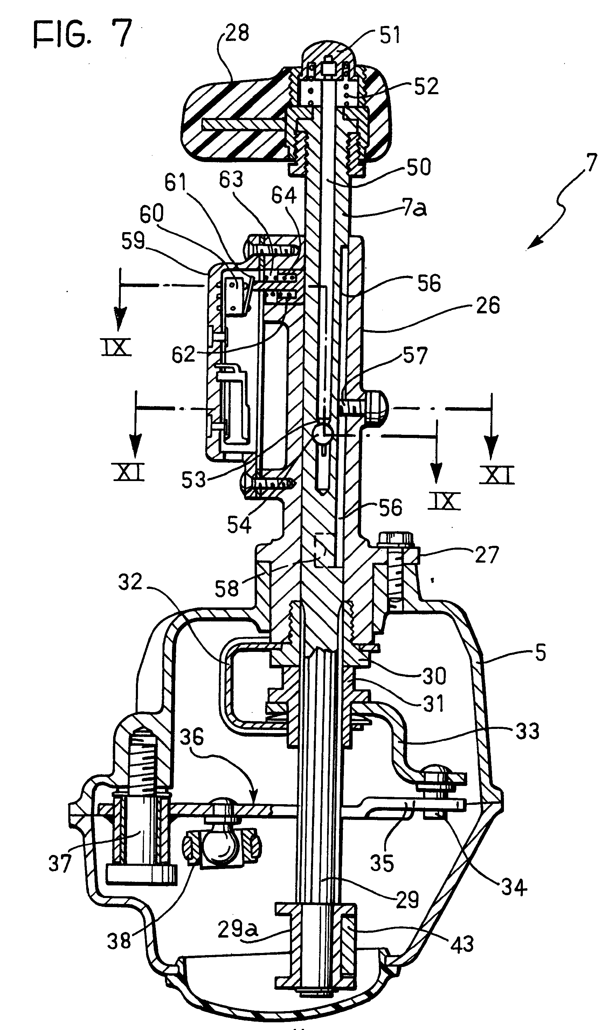

The upper portion of the rod 7a, that is, the portion guided in the tubular element 26, is hollow and houses coaxially a slidable rod 50 whose upper end has an operating push-button 51 which projects from the hand-grip 28 under the action of a thrust spring 52. As can better be seen in Figures 7 to 9, the lower end of the rod 50 has a tapered, wedge-shaped portion 53 which cooperates in the manner explained below with a ball 54 housed in a radial recess 55 in the rod 7a.

The rod 7a has an external axial groove 56 which is engaged by a radial pin 57 carried by the tubular element 26 and, at its lower end, has an angularly-widened part 58 extending from only one side of the groove 56.

A box 59 is fitted to the tubular guide 26 on the side opposite the pin 57 and contains an electrical switch 60 connected to the electro-pneumatic device for locking and unlocking the rear differential of the car. The switch 60 has a pivotable operating member 61 operated by a push rod 62 slidable in a radial hole 63 in the tubular guide 26. The push rod 62 is normally urged against the rod 7a by a spring 64.

The lever 7 operates as follows.

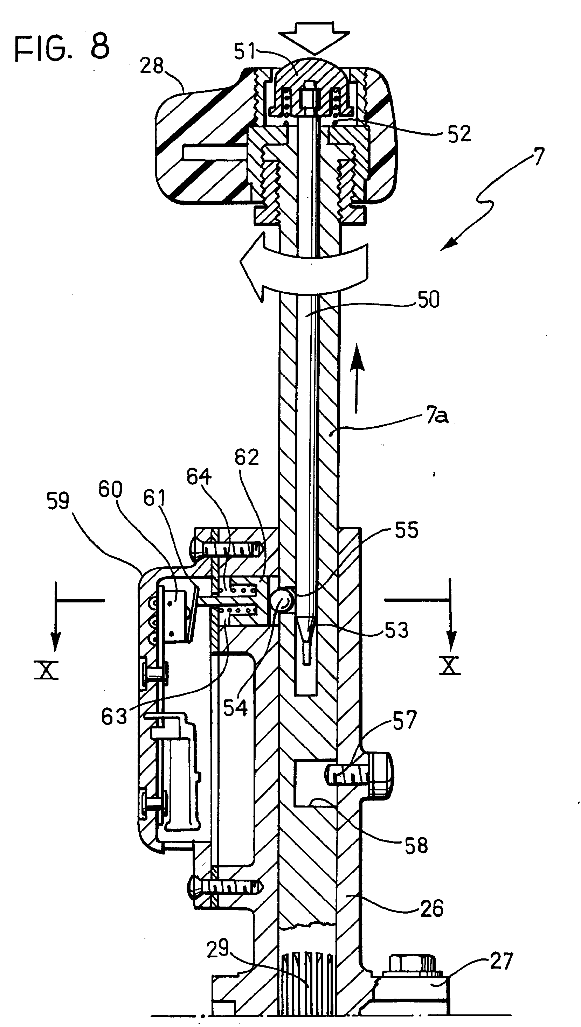

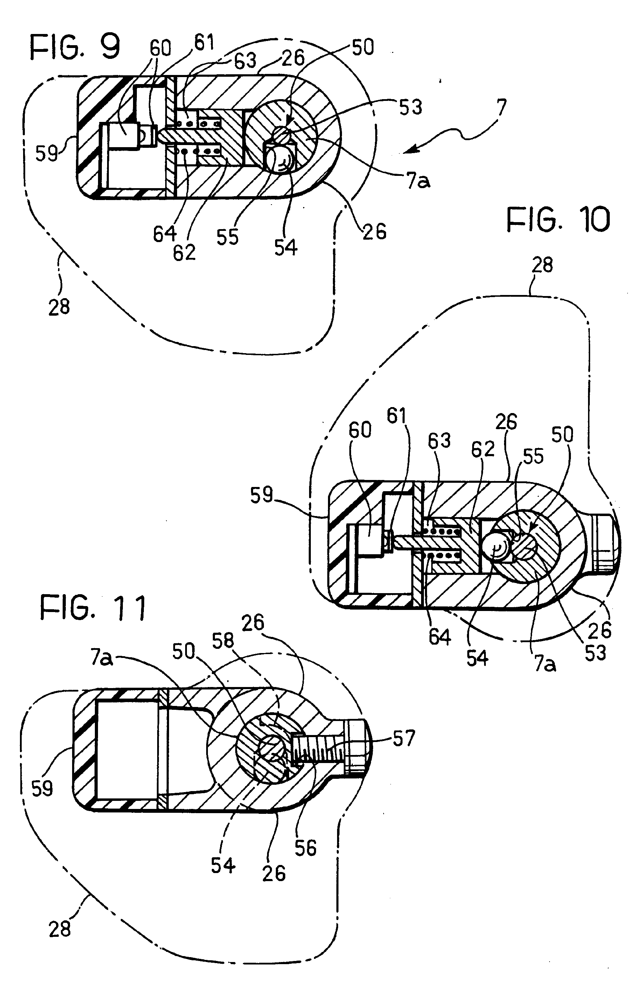

The rod 7a can be moved axially between the lowered position shown in Figure 7 and the raised position shown in Figure 8 by means of the hand-grip 28. The rod 7a can also be rotated through approximately 90° between the angular position shown in Figures 9 and 11 and that shown in Figure 10, but only when it is in the raised position of Figure 8. The rod 50 can be moved axially downwardly from the position shown in Figure 7 to that shown in Figure 8 only when the rod 7a is in the angular position shown in Figure 10.

When the rod 7a is in the lowered position shown in Figure 7, the rear-wheel drive is disengaged and, as stated, only the angular position shown in Figure 9, in which the reduction gear is disengaged, can correspond to this condition. The rod 7a cannot be rotated to the angular position of Figure 10 because it is locked against rotation by the radial pin 57 which is engaged in the slot 56. In this position, the rod 50 is also prevented from being lowered because it is stopped by the ball 54 which is locked radially between the wedge-shaped end 53 of the rod 50 and the internal wall of the tubular guide 26.

The upward translation of the rod 7a by means of the hand-grip 28 brings the lever 7 to the configuration of Figure 8; this movement engages the rear-wheel drive as a result of the pivoting of the rocker element 44 about the pin 45 and the corresponding operation of the cable transmission 48. When the upward translation of the rod 7a is complete, the groove 56 is released from the pin 57 which is located in the angularly-extended part 58. This enables the rod 7a to rotate from the angular position shown in Figure 9 to that shown in Figure 10. In the position of Figure 9, the ball 54 is at the same height as the hole 63 containing the push rod 62 but is radially offset therefrom by about 90°. The rod 50 is thus prevented from sliding downwardly by the ball 54.

When the rod 7a is rotated to the position of Figure 10 by means of the hand-grip 28, the reduction gear is engaged as a result of the pivoting of the arm 33, the corresponding pivoting of the U-shaped element 36, and the consequent operation of the cable transmission 40.

In the angular position of Figure 10, the ball 54 is radially in correspondence with the hole 63, enabling the rod 50 to be moved downwardly by the manual operation of the push-button 51 against the action of the spring 52. In fact, when the button 51 is pressed, the wedge-shaped end 53 of the rod 50 moves the ball 54 radially in the hole 63, resulting in a radial movement of the rod 62 which moves the actuator 61 and switches the switch 60. The switching locks the rear, differential which can subsequently be unlocked by a further lowering of the rod 50 to return the switch 60 to its original condition.

In order to disengage the reduction gear and the rear-wheel drive, the rod 7a must be rotated from the angular position of Figure 10 to that of Figure 9 and translated from the raised position of Figure 8 to the lowered position of Figure 7, the sequence being the reverse of that described above.

As stated above, the gearbox is operated in conventional manner by the operation of the gear lever 6 transversely to select the gear ratios (by means of the cable transmission 23) and longitudinally to engage the ratios selected (by means of the cable transmission 19).

It will be clear from the foregoing that the control unit according to the invention enables all the kinematic operating components to be assembled in a compact unit which is well protected from the outside. The unit also ensures very easy and convenient operation and affords a univocal operating sequence without risks of incorrect operation.

## Claims

1. A unit for operating a disengageable four-wheel-drive transmission for motor cars including a gearbox, permanent drive means for a first pair of wheels, engageable and disengageable drive means for the other pair of wheels, means for engaging and disengaging the engageable and disengageable drive means, a reduction gear, means for engaging and disengaging the reduction gear, at least one lockable differential, means for locking and unlocking the differential, a gear lever, and means for operating the means for engaging and disengaging the drive means, the reduction-gear engagement and disengagement means, and the means for locking and unlocking the differential, characterised in that the operating means comprise a single lever (7) translatable axially between a lowered position and a raised position to disengage and engage the drive means (3) respectively, the lever (7) being rotatable about its axis of translation (A), when it is in the raised position, between two angular positions in which the reduction gear (4) is engaged and disengaged respectively, and a rod (50) mounted within the lever (7) and movable axially relative thereto by means of a projecting operating end (51) to lock and unlock the differential when the lever (7) is in the raised position in which the drive means (3) are engaged and in the angular position in which the reduction gear (4) is engaged.

2. An operating unit according to Claim 1, characterised in that the lever (7) is associated with a first locking device (56, 57) for preventing the lever (7) from rotating to engage and disengage the reduction gear (4) when it is in the lowered position in which the drive means (3) are disengaged, and a second locking device (54) for preventing the rod (50) from moving axially when the lever (7) is in the angular position in which the reduction gear (4) is disengaged.

3. An operating unit according to Claim 2, characterised in that the means for locking and unlocking the differential include an electrical switch (60) which is fixed relative to the lever (7) and an operating member (62) which is movable transverse the axis of translation (A) of the lever (7) to operate the switch (60), and in that the lever (7) has a transverse hole (55) in which a ball (54), against which a wedge-shaped, tapered thrust portion (53) of the rod (50) bears, is movable, the hole (55) being adapted to be positioned in axial and angular alignment with the movable operating member (62), so that the operating member (62) can be moved to operate the electrical switch (60) by the wedge-shaped thrust portion (53) of the rod (50) when the lever (7) is in the raised position in which the drive means (3) are engaged and in the angular position in which the reduction gear (4) is engaged.

4. An operating unit according to Claim 2, characterised in that the first locking device comprises a transverse retaining pin (57) which is fixed relative to the lever (7) and is engaged in an axial groove (56) therein, the groove having a portion (58) which is extended angularly in one sense and is adapted to be positioned in axial correspondence with the pin (57) when the lever (7) is in the raised position.

5. An operating unit according to any one of the preceding claims, characterised in that the means for engaging and disengaging the drive means (3) comprise a rocker element (44) which is pivotable about an axis (45) transverse the axis of translation (A) of the lever (7) and is operated at one end (43) by the lever (7) and connected at the other end (42) to a Bowden cable transmission (48).

6. An operating unit according to any one of the preceding claims, characterised in that the means for engaging and disengaging the reduction gear (4) include a first arm (33) fixed for rotation with the lever (7) and a second arm (36) having one end rotatable about an axis (37) substantially parallel to the axis of translation (A) of the lever (7) and its opposite end (35) operated by the first arm (33), the second arm (36) being connected to a Bowden cable transmission (30).

7. An operating unit according to any one of the preceding claims, characterised in that means (20) for selecting the gear ratios and means (12, 15) for engaging the gear ratios are operatively associated with the lever (6) for operating the gearbox (2) and are connected to respective Bowden cable transmissions (23, 19).

8. An operating unit according to any of Claims 5 to 7, characterised in that the lever (7) and the lever (6) for operating the gearbox (2) are supported by a common housing (5) which contains the means for engaging and disengaging the drive means (3), the means for engaging and disengaging the reduction gear (4), and the means for selecting and engaging the gear ratios of the gearbox (2), and to which the Bowden cable transmissions (19, 23, 40, 48) are connected.

## Patentansprüche

1. Einheit zum Betätigen einer abschaltbaren Vierradantriebs-Übertragung für Kraftfahrzeuge, umfassend
- ein Getriebe,
- Permanentantriebsmittel für ein erstes Radpaar,
- zuschaltbare und abschaltbare Antriebsmittel für das zweite Radpaar,
- Mittel zum Zuschalten und Abschalten der zuschaltbaren und abschaltbaren Antriebsmittel,
- ein Untersetzungsgetriebe,
- Mittel zum Zuschalten und Abschalten des Untersetzungsgetriebes,
- wenigstens ein sperrbares Differential,
- Mittel zum Sperren und Freigeben des Differentials,
- einen Ganghebel, und
- Mittel zum Betätigen der Mittel zum Zuschalten und Abschalten der Antriebsmittel, der Mittel zum Zuschalten und Abschalten des Untersetzungsgetriebes, und der Mittel zum Sperren und Freigeben des Differentials, **dadurch gekennzeichnet**, daß die Betätigungsmittel einen einzigen Hebel (7) umfassen, der zwischen einer abgesenkten und einer angehobenen Stellung axial verschiebbar ist, um die Antriebsmittel (3) abzuschalten bzw. zuzuschalten, wobei der Hebel (7) um seine Verschiebungsachse (A), wenn er sich in der angehobenen Stellung befindet, zwischen zwei Winkelstellungen drehbar ist, in welchen das Untersetzungsgetriebe (4) zugeschaltet bzw. abgeschaltet ist, sowie ferner eine Stange (50) umfassen, welche innerhalb des Hebels (7) angebracht ist, und axial relativ zu diesem mittels eines vorstehenden Betätigungsendes (51) bewegbar ist, um das Differential zu sperren und freizugeben, wenn sich der Hebel (7) in der angehobenen Stellung, in welcher die Antriebsmittel (3) zugeschaltet sind, und in der Winkelstellung, in welcher das Untersetzungsgetriebe (4) zugeschaltet ist, befindet.

2. Betätigungseinheit nach Anspruch 1, **dadurch gekennzeichnet**, daß dem Hebel (7) eine erste Sperreinrichtung (56, 57) zugeornet ist, welche den Hebel (7) daran hindert, sich zu drehen, um das Untersetzungsgetriebe (4) zuzuschalten und abzuschalten, wenn er sich in der abgesenkten Stellung befindet, in welcher das Antriebsmittel (3) abgeschaltet ist, sowie eine zweite Sperreinrichtung (54) (zugeordnet ist), welche die Stange (50) an einer axialen Bewegung hindert, wenn der Hebel (7) sich in der Winkelstellung befindet, in der das Untersetzungsgetriebe (4) abgeschaltet ist.

3. Betätigungseinheit nach Anspruch 2, **dadurch gekennzeichnet**, daß die Mittel zum Sperren und Freigeben des Differentials einen elektrischen Schalter (60) umfassen, welcher relativ zu dem Hebel (7) festgelegt ist, sowie ein Betätigungselement (62), welches quer zur Verschiebungsachse (A) des Hebels (7) bewegbar ist, um den Schalter (60) zu betätigen, und daß der Hebel (7) eine Queröffnung (55) aufweist, in welcher eine Kugel (54) bewegbar ist, gegen die ein keilförmiger, abgeschrägter Schubabschnitt (53) der Stange (50) drückt, wobei die Öffnung (55) so ausgebildet ist, daß sie in axialer und winkelmäßiger Ausrichtung mit dem beweglichen Betätigungselement (62) anordenbar ist, so daß das Betätigungselement (62) bewegt werden kann, um den elektrischen Schalter (60) durch den keilförmigen Schubabschnitt (53) der Stange (50) zu betätigen, wenn sich der Hebel (7) in der angehobenen Stellung, in welcher die Antriebsmittel (3) zugeschaltet sind, und in der Winkelstellung, in welcher das Untersetzungsgetriebe (4) zugeschaltet ist, befindet.

4. Betätigungseinheit nach Anspruch 2, **dadurch gekennzeichnet**, daß die erste Sperreinrichtung einen querliegenden Haltestift (57) umfaßt, welcher relativ zu dem Hebel (7) festgelegt ist und in eine axiale Vertiefung (56) in diesem eingreift, wobei die Vertiefung einen Abschnitt (58) aufweist, welcher winkelmäßig in einer Richtung langgestreckt ist, und welcher so aisgebildet ist, daß er in axialer Übereinstimmung mit dem Stift (57) angeordnet ist, wenn sich der Hebel (7) in seiner angehobenen Stellung befindet.

5. Betätigungseinheit nach einem der vorhergehenden Ansprüche, **dadurch gekennzeichnet**, daß die Mittel zum Zuschalten und Abschalten der Antriebsmittel (3) ein Kipphebelelement (44) umfassen, welches um eine Achse (45) quer zur Verschiebungsachse (A) des Hebels (7) schwenkbar ist, und welches an einem Ende (43) durch den Hebel (7) betätigt ist und an dem anderen Ende (42) mit einer Bowdenzug-Übertragung (48) verbunden ist.

6. Betätigungseinheit nach einem der vorhergehenden Ansprüche, **dadurch gekennzeichnet**, daß die Mittel zum Zuschaltbaren und Abschalten des Untersetzungsgetriebes (4) einen ersten Arm (33) umfassen, welcher zur Drehung mit dem Hebel (7) festgelegt ist, sowie einen zweiten Arm (36) mit einem Ende, das im wesentlichen um eine zur Verschiebungsachse (A) des Hebels (7) parallele Achse drehbar ist, und dessen anderes Ende (35) durch den ersten Arm (33) betätigt ist, wobei der zweite Arm (36) mit einer Bowdenzug-Übertragung (30) verbunden ist.

7. Betätigungseinheit nach einem der vorhergehenden Ansprüche, **dadurch gekennzeichnet**, daß Mittel (20) zum Auswählen der Übersetzungsverhältnisse und Mittel (12, 15) zum Zuschalten der Übersetzungsverhältnisse betriebsmäßig mit dem Hebel (6) zum Betätigen des Getriebes (2) sowie mit jeweiligen Bowdenzug-Übertragungen (23, 19) verbunden sind.

8. Betätigungseinheit nach einem der Ansprüche 5 bis 7, **dadurch gekennzeichnet**, daß der Hebel (7) und der Hebel (6) zum Betätigen des Getriebes (2) durch ein gemeinsames Gehäuse (5) getragen sind, welches die Mittel zum Zuschalten und Abschalten der Antriebsmittel (3), die Mittel zum Zuschalten und Abschalten des Untersetzungsgetriebes (4) und die Mittel zum Auswählen und Zuschalten der Übersetzungsverhältnisse des Getriebes (2) enthalten, und mit welchem die Bowdenzug-Übertragungen (19, 23, 40, 48) verbunden sind.

## Revendications

1. Transmission à quatre roues motrices débrayable pour un véhicule automobile comprenant une botte de vitesses, des moyens d'entraînement permanent pour une première paire de roues, des moyens d'entraînement embrayables et débrayables pour l'autre paire de roues, des moyens pour embrayer et débrayer les moyens d'entraînement embrayables et débrayables, un réducteur, des moyens pour embrayer et débrayer le réducteur, au moins un différentiel blocable, des moyens pour bloquer et débloquer le différentiel, un levier de vitesses, et des moyens servant à actionner les moyens pour embrayer et débrayer les moyens d'entrainement, les moyens d'embrayage et de débrayage du réducteur et les moyens pour bloquer et débloquer le différentiel, caractérisée en ce que les moyens de commande comprennent un unique levier (7) qu'on peut déplacer en translation axiale entre une position abaissée et une position relevée pour débrayer et embrayer respectivement les moyens d'entraînement (3), le levier (7) pouvant tourner autour de son axe de translation (A), lorsqu'il est dans la position relevée, entre deux positions angulaires dans lesquelles le réducteur (4) est embrayé et débrayé respectivement, et une tige (50) montée à l'intérieur du levier (7) et pouvant être déplacée axialement par rapport à celui-ci, à l'aide d'une extrémité de commande saillante (51), pour bloquer et débloquer le différentiel lorsque le levier (7) est dans la position relevée dans laquelle les moyens d'entraînement (3) sont embrayés et dans la position angulaire dans laquelle le réducteur (4) est embrayé.

2. Unité de commande selon la revendication 1, caractérisée en ce que le levier (7) est associé à un premier dispositif de verrouillage (56, 57) pour empêcher le levier (7) de tourner pour embrayer ou débrayer le réducteur (4) lorsqu'il est dans la position abaissée dans lequelle les moyens d'entraînement (3) sont débrayés, et un second dispositif de verrouillage (54) pour empêcher la tige (50) de se déplacer axialement lorsque le levier (7) est dans la position angulaire dans laquelle le réducteur (4) est débrayé.

3. Unité de commande selon la revendication 2, caractérisée en ce que les moyens servant à bloquer et débloquer le différentiel comprennent un interrupteur électrique (60) qui est fixe par rapport au levier (7), et un élément de commande (62) qui peut se déplacer transversalement à l'axe de translation (A) du levier (7) pour actionner l'interrupteur (60), et en ce que le levier (7) présente un trou transversal (55) dans lequel peut se déplacer une bille (54) contre laquelle porte une partie de poussée (53) de la tige (50) à section décroissante, en forme de coin, le trou (55) étant adapté pour être positionné dans l'alignement axial et angulaire de l'élément de commande mobile (62), de manière que l'élément de commande (62) puisse être mis en mouvement pour actionner l'interrupteur électrique (60) à l'aide de la partie de poussée (53) en forme de coin de la tige (50) lorsque le levier (7) se trouve dans la position relevée, dans laquelle les moyens d'entraînement (3) sont embraqués, et dans la position angulaire dans laquelle le réducteur (4) est embrayé,

4. Unité de commande selon la revendication 3, caractérisé en ce que le premier dispositif de verrouillage comprend une cheville de retenue transversale (57) qui est fixe par rapport au levier (7) et est engagée dans une rainure axiale (56) de ce levier, la rainure ayant une partie (58) qui est prolongée en angle dans un seul sens et est adaptée pour être positionnée au niveau axial de la cheville (57) lorsque le levier (7) se trouve dans sa position relevée.

5. Unité de commande selon une quelconque des revendications précédentes, caractérisée en ce que les moyens servant à embrayer et débrayer les moyens d'entraînement (3) comprennent un élément de renvoi (44) qu'on peut faire pivoter autour d'un axe (45) transversal à l'axe de translation (A) du levier (7) et qui est commandé à une première extrémité (43) par le levier (7) tandis qu'à l'autre extrémité (42), il est relié à une transmission (48) à câble Bowden.

6. Unité de commande selon une quelconque des revendications précédentes, caractérisé en ce que les moyens servant à embrayer et débrayer le réducteur (4) comprennent un premier bras (33) rendu solidaire en rotation du levier (7) et un second bras (36) ayant une extrémité qui peut tourner autour d'un axe (37) sensiblement parallèle à l'axe de translation (A) du levier (7), tandis que son extrémité opposée (35) est actionnée par le premier bras (33), le second bras (36) étant relié à une transmission (30) à câble Bowden.

7. Unité de commande selon une quelconque des revendications précédentes, caractérisé en ce que des moyens (20) servant à sélectionner les rapports d'engrenage et des moyens (12, 15) servant à engager les rapports d'engrenage sont fonctionnellement associés au levier (6) pour commander la boîte de vitesses (2) et sont reliés aux transmissions à câble Bowden respectives (23, 19).

8. Unité de commande selon une quelconque des revendications 5 à 7, caractérisée en ce que le levier (7) et le levier (6) servant à commander la boîte de vitesses (2) sont supportés par un carter commun (5) qui contient les moyens servant à embrayer et débrayer les moyens d'entraînement (3), les moyens servant à embrayer et débrayer le réducteur (4), et les moyens servant à sélectionner et engager les rapports d'engrenage de la boîte de vitesses (2), et auquel les transmissions à câble Bowden (19, 23, 40, 48) sont reliées.
